# EUROPEAN PATENT APPLICATION

(11) **EP 4 644 029 A1**
(43) Date of publication of application: **05.11.2025**
(21) Application number: 25170312.0
(22) Date of filing: 14.04.2025
(51) Int. Cl.: B23K 9/10, B23K 9/28, B23K 9/32, B23K 37/003

(54) **COOLER CONFIGURED TO COOL A WELDING TOOL ; WELDING-TYPE SYSTEM WITH SUCH COOLER**

(30) Priority: 29.04.2024 US 202463639915 P; 11.03.2025 US 202519076461
(71) Applicant: HGF, Leeds, West Yorkshire LS11 9DX (GB)
(72) Inventor: HOEGER, Michael, Glenview, 60025 (US)
(74) Representative: HGF

(57) **Abstract**

the present application relates to a welding-type system (100) includes a welding-type tool (140) and a cooler (120). The cooler /(120) comprising a cooler outlet connection (130) configured to provide fluid to the welding-type tool (140), wherein the welding-type tool (140) receives the fluid through one or more conduits running through a portion of the welding-type tool (140), and wherein the cooler outlet connection (230) is a valve configured to retain the fluid within the cooler outlet connection (230).. Further a cooler (120) is defined, which is configured to cool a welding-type tool (140), the cooler (120) including an outlet connection (230) configured to provide fluid to the welding-type tool (140), wherein the outlet connection (230) is a valve configured to retain the fluid within the outlet connection (230), and an inlet connection (240) configured to receive the fluid from the welding-type tool (140), wherein the cooler (120) is configured to cool the welding-type tool (140) by recirculating the fluid to the welding-type tool (140).

## Description

### RELATED APPLICATIONS

The present application claims the benefit of U.S. Provisional Patent Application Serial No. 63/639,915, filed April 29, 2024, entitled "COOLANT FLOW CONNECTIONS FOR COOLING SYSTEMS." The entirety of U.S. Provisional Patent Application Serial No. 63/639,915 is expressly incorporated herein by reference.

### FIELD OF THE DISCLOSURE

This disclosure relates generally to cooling systems and, more particularly, to coolant flow connections for cooling systems.

### BACKGROUND

Conventional power supplies utilize coolant that is provided to a welding torch and power cable through a coolant hose which is connected to a cooler. Typical cooler connections are prone to user error from swapping the coolant flow path direction, and do not prevent incidental discharge of coolant when a welding torch is attached or if the welding torch is connected to the cooler outlet while the cooler inlet is disconnected. Furthermore, conventional coolant connections require the use of tools.

### SUMMARY

Cooling systems and coolant flow connections for cooling systems are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example welding-type system, in accordance with aspects of this disclosure.
FIG. 2 is a perspective view of an example cooling system of the example welding-type system of FIG. 1.
FIG. 3 is a perspective view of example coolant flow connections of the example cooling system of FIG. 2.
FIG. 4 is an illustration of example coolant flow cable connections for the example cooling system of FIG. 3.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Disclosed example welding-type systems provide a cooler outlet connector that prevents and/or minimizes the flow of coolant unless both the cooler inlet connector and cooler outlet connector are both connected. Disclosed example welding-type system include a male connector on the cooler outlet connection and a female connector on the hot coolant return line. Disclosed example connectors may be toolless connections, limit user error, and prevent accidental discharge of coolant.

Disclosed example welding-type systems provide a cooler that reduces or minimizes accidental discharge by providing a cooler outlet connector that reduces or minimizes accidental discharge of coolant. In some disclosed examples, cooler connections allow cooler discharge line and cooler intake lines to be connected to each other during transport to reduce or minimize leakage of coolant. In some disclosed example, cooler outlet and inlet connections do not require additional tools or parts in order to connect the cooler to the welding torch. Disclosed example welding-type systems allow operators to connect a cool to a power supply while the cooler is running.

Disclosed example coolers are configured to cool a welding-type tool and comprise an outlet connection configured to provide fluid to the welding-type tool, wherein the outlet connection is a valve configured to retain the fluid within the outlet connection, and an inlet connection configured to receive the fluid from the welding-type tool, wherein the cooler is configured to cool the welding-type tool by recirculating the fluid to the welding-type tool. In some example coolers, the outlet connection is a female connector. In some example coolers, the inlet connection comprises a first pressure and is a male connector. In some example coolers, the outlet connection comprises a second pressure, and the second pressure is greater than the first pressure. In some disclosed example coolers, the inlet connection and the outlet connection are connected via a fluid hose during transport. In some example coolers, the welding-type tool is a water-cooled torch.

Some disclosed example coolers include a fluid hose connected to the outlet connection while the cooler is active results in no fluid discharge. In some disclosed example coolers, the outlet connection is a quick-connect fitting. In some disclosed example coolers, the outlet connection is a threaded connection.

Disclosed example welding-type systems include a welding-type system including a welding-type tool and a cooler comprising a cooler outlet connection configured to provide fluid to the welding-type tool, wherein the welding-type tool receives the fluid through one or more conduits running through a portion of the welding-type tool, and wherein the cooler outlet connection is a valve configured to retain the fluid within the cooler outlet connection. In some example welding-type systems, the cooler further includes a cooler inlet connection configured to receive the fluid from the welding-type tool via a return path.

Disclosed example welding-type systems include a coolant line, wherein the coolant line comprises a male connection to connect the coolant line to the cooler outlet connection and a female connection to connect the coolant line to the cooler inlet connection. In some disclosed example welding-type systems, the male connection and the female connection are toolless. In some disclosed example welding-type systems, the welding-type tool is a water-cooled tool.

Disclosed example welding-type systems include a fluid hose connected to the cooler outlet connection while the cooler is active results in no fluid discharge. In some example welding-type systems, the cooler outlet connection is a quick-connect fitting. In some disclosed example welding-type systems, the cooler outlet connection is a threaded connection.

As used herein, the terms "first" and "second" may be used to enumerate different components or elements of the same type, and do not necessarily imply any particular order.

As used herein, the words "exemplary" and "example" mean "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

As used herein, the term "coolant" refers fluid used to cool equipment, components, and/or accessories used in welding-type systems. Coolant may be water, may be ethylene glycol, propylene glycol, or any similar fluid that is used to cool equipment, components, and/or accessories used in welding-type systems, or in any welding-type process.

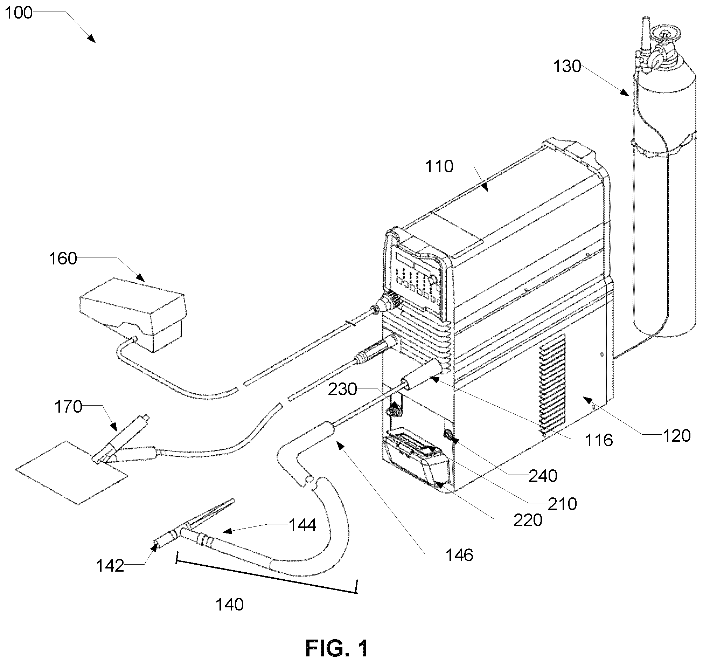

FIG. 1 illustrates an example welding-type system 100. The example welding type system 100 of FIG. 1 includes a power supply 110 for delivery of welding power, a cooler 120, and a gas source 130 for delivery of shielding gas. A welding type-tool, such as a gas tungsten arc welding (GTAW) torch, a wire-fed welding torch 140 (e.g., a torch to perform gas metal arc welding (GMAW), flux cored arc welding (FCAW), etc.), a plasma cutting torch, a carbon arc cutting torch, a gouging torch, water-cooled torch, and/or any other welding-type tool, may be connected to the power supply 110. In some examples, a welding wire source (not shown) may also provide welding wire for certain types of welding.

The example welding torch 140 includes a torch head 142 and a torch body 144. A welding cable 146 conducts welding power, shielding gas, and/or welding wire, from the power supply connector 116 to the torch body 144 for delivery to the torch head 142. A remote control 160, and a ground clamp 170 may also be connected to the power supply 110.

In some examples, the power supply 110 directly supplies input power to the welding torch 140. In the illustrated example, the power supply 110 is configured to supply power to welding operations and/or preheating operations. The example power supply 110 may also provide power to a wire feeder (not shown) in order to supply electrode wire to the welding torch 140 for various welding applications (e.g., GMAW welding, flux core arc welding (FCAW)). In some examples, the power supply 110 receives the shielding gas from the gas source 130 and routes the shielding gas to the power supply connector 116. In some other examples, the shielding gas is provided via a separate connection. The power supply 110 may include additional connections for the remote control 160 and/or the ground clamp 170.

The power supply 110 includes a controller (not shown) to control the operation of the power supply 110. The controller may also include interface circuitry for communicating data to other devices in the system, such as the welding wire source 150 or other welding-type devices. For example, in some situations, power supply 110 wirelessly communicates with other welding devices within the welding system. Further, in some situations, the power supply 110 communicates with other welding devices using a wired connection, such as by using a network interface controller (NIC) to communicate data via a network (e.g., ETHERNET, 10baseT, 10base100, etc.).

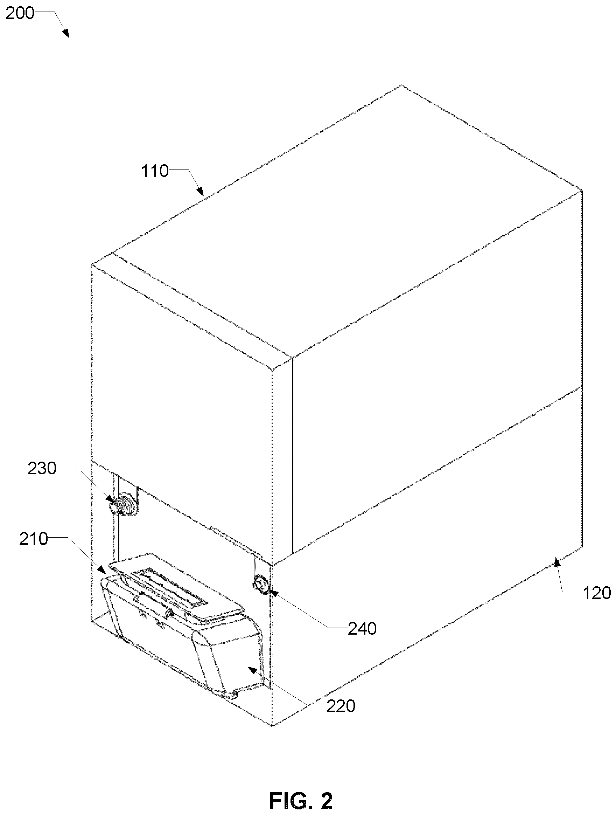

The cooler 120 provides fluid or coolant to and from the welding torch 140 in order to cool the torch head 142 and the welding cable 146. In some examples, the cooler 120 is integrated with the power supply 110 or mounted to the power supply 110 as illustrated in FIG. 2 (e.g., cooling system 200). However, the cooler 120 may be independent from the power supply 110 or attached in a different configuration (e.g., adjacent to the power supply 110, etc.). In some examples, the cooler 120 is powered by the power supply 110. In some other examples, the cooler 120 is powered by a separate power connection independent from the power supply 110. The cooler 120 may include a spout 210 or other opening to fill the coolant tank 220 with fluid. The cooler 120 includes a cooler outlet connection 230 and a cooler inlet connection 240.

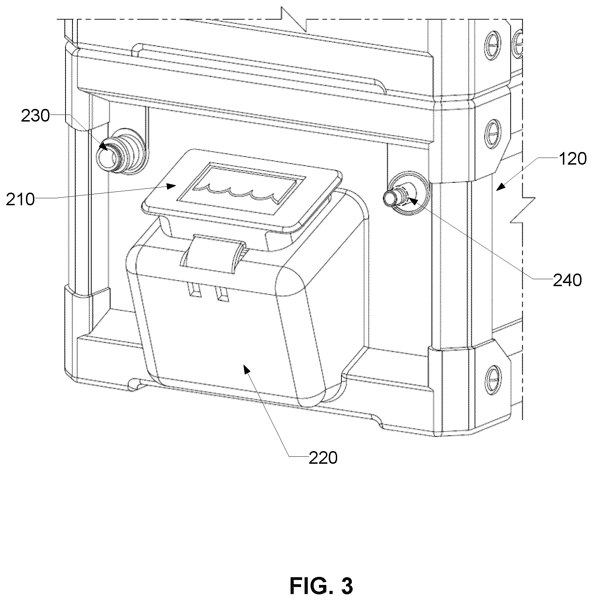

FIG. 2 is a perspective view of an example cooling system 200 of the example welding-type system of FIG. 1. FIG. 3 is a detailed perspective view of the example cooler of the example cooling system of FIG. 2. In some examples, the cooling system 200 includes a power supply 110 and a cooler 120. The cooler 120 may include a spout 210 or other opening to fill the coolant tank 220 with fluid. The cooler 120 includes a cooler outlet connection 230 and a cooler inlet connection 240. In some examples, the cooler outlet connection 230 and a cooler inlet connection 240 may be positioned in different areas of the power supply 110. Although the spout 210 is depicted on a same side as the cooler outlet connection 230 and cooler inlet connection 240, the spout 210 may be placed on another side of the cooler 120.

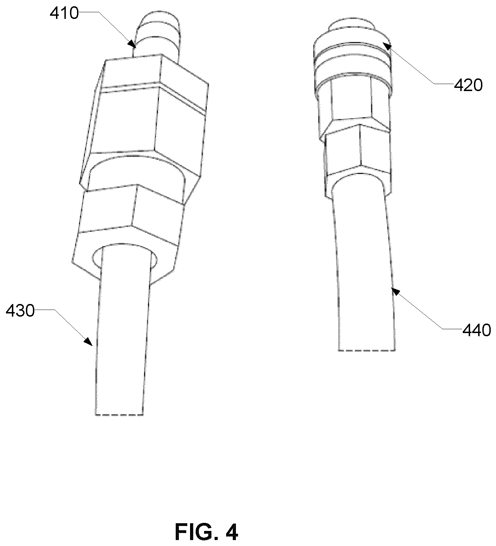

The cooler 120 may recirculate the coolant provided via the coolant tank 220 using a pump or similar means. The cooler 120 supplies coolant to the welding torch 140 via cooler outlet connection 230, and the welding torch 140 returns hot coolant via cooler inlet connection 240. An intake hose and discharge hose (not shown but described below with respect to FIG. 4) may be connected from the cooler 120 to the welding torch 140.

In some examples, the cooler outlet connection 230 includes a female connection, and the cooler inlet connection 240 includes a male connection. In some examples, the cooler outlet connection 230 has a higher pressure than the cooler inlet connection 240. In some examples, the cooler outlet connection 230 and/or the cooler inlet connection 240 include a seal, valve, or other device, such as a Schrader or similar valve that may be used to retain the coolant within the cooler 120 and/or prevent accidental leakage of the coolant externally from the cooler 120. Additionally and/or alternatively, the cooler outlet connection 230 and/or the cooler inlet connection 240 may be tool-less connections, such as quick-connect fittings, threaded connections, etc.

FIG. 4 is an illustration of example coolant flow cable connections for the example cooling system of FIG. 3. Cable outlet connection 410 is an example connector that may be inserted into the cooler outlet connection 230. Cable inlet connection 420 is an example connector that may be inserted into the cooler inlet connection 240. Cable outlet connection 410 may be connected to a discharge hose 430 for providing coolant to the welding torch 140, and cable inlet connection 420 may be connected to an intake hose 440which provides a return path for the coolant from the welding torch 140. The discharge hose 430 and intake hose 440 may be tubing to transport coolant to and from the welding torch 140 and the cooler 120.

In some examples, when the cable inlet connection 420 is inserted into the cooler inlet connection 240, coolant is not discharged from the cooler 210. In some examples, when cable outlet connection 410 is inserted into cooler outlet connection 230, coolant is not discharged from the cooler 210. In some examples, when cable inlet connection 420 and cable outlet connection 410 are inserted into cooler inlet connection 240 and cooler outlet connection 230, coolant is discharged from the cooler 210 to the welding torch 140. In some examples, inserting the discharge hose 430 and intake hose 440 may be performed while the cooler 210 is active and/or the pump within the cooler that is used to recirculate coolant is running. In some such examples, connecting the discharge hose 430 to the outlet connection while the cooler 210 is active results in no fluid discharge.

In some examples, cable outlet connection 410 and cable inlet connection 420 may be connections at opposite ends of a same cable and may be connected to the cooler outlet connection 230 and cooler inlet connection 240. For example, a cable comprising cable outlet connection 410 at one end and cable inlet connection 420 at another end may be inserted into the cooler outlet connection 230 and cooler inlet connection 240, respectively, when transporting the cooler 120 from one welding location to another in order to prevent spillage of coolant from the cooler 120.

In some examples, the discharge hose 430 has a female connection at the welding torch 140, which is a side of the discharge hose opposite from the cable outlet connection 410. In some examples, the intake hose 440 has a male connection at the welding torch 140, which is a side of the intake hose opposite from the cable inlet connection 420.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses :
Clause 1 : A cooler configured to cool a welding-type tool, the cooler comprising : an outlet connection configured to provide fluid to the welding-type tool, wherein the outlet connection is a valve configured to retain the fluid within the outlet connection; and an inlet connection configured to receive the fluid from the welding-type tool, wherein the cooler is configured to cool the welding-type tool by recirculating the fluid to the welding-type tool.
Clause 2: The cooler of clause 1, wherein the outlet connection is a female connector.
Clause 3 : The cooler of clause 2, wherein the inlet connection comprises a first pressure and is a male connector.
Clause 4 : The cooler of clause 3, wherein the outlet connection comprises a second pressure, and the second pressure is greater than the first pressure.
Clause 5 : The cooler of clause 1, wherein the inlet connection and the outlet connection are connected via a fluid hose during transport.
Clause 6 : The cooler of clause 1, wherein the welding-type tool is a water-cooled torch.
Clause 7 : The cooler of clause 1, wherein a fluid hose connected to the outlet connection while the cooler is active results in no fluid discharge.
Clause 8 : The cooler of clause 1, wherein the outlet connection is a quick-connect fitting.
Clause 9 :The cooler of clause 1, wherein the outlet connection is a threaded connection.
Clause 10 : A welding-type system comprising: a welding-type tool; and a cooler comprising a cooler outlet connection configured to provide fluid to the welding-type tool, wherein the welding-type tool receives the fluid through one or more conduits running through a portion of the welding-type tool, and wherein the cooler outlet connection is a valve configured to retain the fluid within the cooler outlet connection.
Clause 11 : The welding-type system of clause 10, wherein the cooler further comprises a cooler inlet connection configured to receive the fluid from the welding-type tool via a return path.
Clause 12 : The welding-type system of clause 11, further comprising a coolant line, wherein the coolant line comprises a male connection to connect the coolant line to the cooler outlet connection and a female connection to connect the coolant line to the cooler inlet connection.
Clause 13: The welding-type system of clause 12, wherein the male connection and the female connection are toolless.
Clause 14 : The welding-type system of clause 10, wherein the welding-type tool is a water-cooled tool.
Clause 15 : The welding-type system of clause 10, wherein a fluid hose connected to the cooler outlet connection while the cooler is active results in no fluid discharge.
Clause 16 : The welding-type system of clause 10, wherein the cooler outlet connection is a quick-connect fitting.
Clause 17 : The welding-type system of clause 10, wherein the cooler outlet connection is a threaded connection.

## Claims

1. A cooler configured to cool a welding-type tool, the cooler comprising:
an outlet connection configured to provide fluid to the welding-type tool, wherein the outlet connection is a valve configured to retain the fluid within the outlet connection; and
an inlet connection configured to receive the fluid from the welding-type tool, wherein the cooler is configured to cool the welding-type tool by recirculating the fluid to the welding-type tool.

2. The cooler of claim 1, wherein the outlet connection is a female connector.

3. The cooler of claim 2, wherein the inlet connection comprises a first pressure and is a male connector.

4. The cooler of claim 3, wherein the outlet connection comprises a second pressure, and the second pressure is greater than the first pressure.

5. The cooler of claim 1, wherein the inlet connection and the outlet connection are connected via a fluid hose during transport.

6. The cooler of claim 1, wherein the welding-type tool is a water-cooled torch.

7. The cooler of claim 1, wherein a fluid hose connected to the outlet connection while the cooler is active results in no fluid discharge.

8. The cooler of claim 1, wherein the outlet connection is a quick-connect fitting.

9. The cooler of claim 1, wherein the outlet connection is a threaded connection.

10. A welding-type system comprising:
a welding-type tool; and
a cooler comprising a cooler outlet connection configured to provide fluid to the welding-type tool, wherein the welding-type tool receives the fluid through one or more conduits running through a portion of the welding-type tool, and wherein the cooler outlet connection is a valve configured to retain the fluid within the cooler outlet connection,
and wherein optionally the cooler outlet connection is a quick-connect fitting or a threaded connection.

11. The welding-type system of claim 10, wherein the cooler further comprises a cooler inlet connection configured to receive the fluid from the welding-type tool via a return path.

12. The welding-type system of claim 11, further comprising a coolant line, wherein the coolant line comprises a male connection to connect the coolant line to the cooler outlet connection and a female connection to connect the coolant line to the cooler inlet connection.

13. The welding-type system of claim 12, wherein the male connection and the female connection are toolless.

14. The welding-type system of claim 10, wherein the welding-type tool is a water-cooled tool.

15. The welding-type system of claim 10, wherein a fluid hose connected to the cooler outlet connection while the cooler is active results in no fluid discharge.
